# EUROPEAN PATENT SPECIFICATION

(11) **EP 0 454 265 B1**
(45) Date of publication and mention of the grant of the patent: **19.10.1994**
(21) Application number: 91200988.3
(22) Date of filing: 25.04.1991
(51) Int. Cl.: A01C 15/00

(54) **An implement for spreading material**
Gerät zum Streuen von Material
Outil pour épandre de matériau

(30) Priority: 26.04.1990 NL 9000998
(43) Date of publication of application: 30.10.1991
(73) Proprietor: C. van der Lely N.V., NL-3155 PD Maasland (NL)
(72) Inventor: van der Lely, Cornelis, Zug (CH)
(74) Representative: Mulder, Herman

(56) References cited:
- EP-A- 0 223 170
- DE-A- 3 739 291
- FR-A- 2 637 446

## Description

The invention relates to an implement for spreading over a surface area material, in particular granular and/or pulverulent material, such as fertilizer, which implement comprises a frame, a hopper for the material to be spread and at least one spreader member, to which material from the hopper can be delivered, the frame including a carrier frame and a coupling trestle, the coupling trestle having coupling elements to couple the implement to a vehicle, e.g. a tractor, the carrier frame supporting the at least one spreader member, said carrier frame and the coupling trestle being pivotably coupled to one another by a pivot structure to be pivotable relative to each other about a pivot axis extending substantially parallel to the direction of normal operative travel of the implement, such that, during movement of the implement over the surface area, the at least one spreader member (5, 6) can maintain an at least substantially stable position relative to said surface area.

An implement of the above-mentioned kind is known from EP-A-0 223 170. This known device relates to a spreading implement, especially to a pneumatic spreader. This known spreading implement has spreading members and a hopper mounted to frame means. The frame means include a trestle having coupling means to couple the implement to a tractor or suchlike vehicle. In this known construction, the coupling trestle and the frame means supporting the spreading member and the hopper can move relatively to each other about a vertical axis and about a pivot axis extending in the direction of travel.

The DE-A-37 39 291 shows a three-point lifting device of a tractor. In this known construction the lifting arms of the lifting device are mounted to the tractor through the intermediary of a transverse beam, which is pivotable relative to the tractor about a pivot axis extending at least substantially in the direction of travel. In this known construction a lateral movement of the transverse beam is possible by two pivot axes, one of which is located above the other.

It is an object of the invention to improve an implement of the above-defined type such that the spreading member can be adjusted relatively to the surface area over which the material has to be spread with a favourable and simple construction of the implement.

According to the invention, this can be achieved when the carrier frame and the coupling trestle are coupled to each other by a shift structure to be displaceable relative to each other in a direction transverse to the direction of normal operative travel of the implement.

Due to the displaceability of the carrier frame supporting the spreader member relative to the trestle, the position of the spreader member relative to the surface can be adjusted in a simple manner. In particular this may be important when, by means of the spreader member, the material has to be spread near the edges of the surface to be spread, or when it has to be distributed over a sloping surface. A favourable embodiment of this displacing the spreader member relative to the trestle can be obtained when the shift structure is arranged near the pivot axis between the coupling trestle and the carrier frame of the implement. An advantageous adjustment of the trestle and the carrier frame relative to each other can be obtained when the shift structure includes an adjusting device to adjust the carrier frame and the coupling trestle transversely relative to each other, one end of the adjusting device being coupled to the carrier frame and the other end to the coupling trestle.

In a favourable embodiment, the adjusting device may be designed as a hydraulic mechanism. In another favourable construction, the shift structure includes a carrier rigidly attached to a pivot disc, said pivot disc being movably coupled within a carrier ring mounted to the trestle, the carrier being slidably coupled with strips attached to the carrier frame.

According to a further embodiment of the invention, the coupling between the trestle and the carrier frame includes dampers fitted between the trestle and the carrier frame, said dampers damping the movement of the trestle and the carrier frame around the pivot axis. This damping movement about the pivot axis is advantageous for an easy adjustment of the trestle and the frame relative to each other. Further, these dampers will damp a movement around the pivot axis when the implement is traveled over uneven surfaces during operation of the implement. Owing hereto, a stable position of the spreader member will be obtained in said position relative to the surface area. As a result, the position of the spreader member relative to the surface area to be spread remains more stable, so that the spread of the material over the surface is not affected by the movement of the tractor on uneven fields. Consequently, it will be possible to effect the spread more uniformly.

A favourable construction, whereby the trestle and the carrier frame can be moved relative to each other in a simple way, is obtained when, according to the invention, the tractor trestle and the carrier frame are interconnected by means of two hook-and-lock connections. In a favourable embodiment, the pivot axis is located near the top end of the implement. In this connection substantially the greater part of the implement's weight can influence a straight position of the spreader member due to the fact that the centre of gravity of the implement will be lower than the coupling of the carrier frame to the trestle through the intermediary of the pivot axis and shift construction.

A simple construction is obtained when the carrier frame is attached to a further carrier frame supporting the spreader member. In this connection the carrier frame and the further carrier frame supporting the spreader member may be designed as separate units which can also be used as such. According to the invention, a favourable construction can be obtained when the carrier frame and the further carrier frame are detachably coupled to one another by a three-point connection having means provided to the carrier frame and means provided to the further carrier frame. When the further carrier frame can be attached by means of a three-point connection to the carrier frame, then the carrier frame and trestle together can be designed as a seperate intermediate frame. Then the intermediate frame can be used in a simple manner for coupling to a tractor various implements for spreading material.

A favourable embodiment is obtained when the implement includes a screen plate which is located above the spreader member and possesses a guide edge for guiding downwardly material that is spread too high during operation. Thus, this part of the material can be guided in the downward direction. In particular this may be of importance when in an oblique position of the spreader member relative to the surface area to be spread, the material has to be spread near the edges of the surface area to be spread.

For a better understanding of the invention and to show how the same may be carried into effect, reference will now be made, by way of example, to the accompanying drawings, in which:
Figure 1 is a side view of an implement according to the invention;
Figure 2 is a plan view of the implement as shown in Figure 1, taken in the direction according to arrow II in Figure 1;
Figure 3 is a front view of a connecting frame of the implement, taken on the line III-III in Figure 1, an other portion of the implement having been indicated by interrupted lines;
Figure 4 is a cross-sectional view of the implement portion shown in Figure 3, taken in the direction according to line IV-IV in Figure 3;
Figure 5 is a plan view of the implement portion according to the invention as shown in Figures 3 and 4, taken in the direction according to arrow V in Figure 3;
Figure 6 is a rear view of the implement according to the invention, the said implement being in an oblique working position relative to the surface are to be spread, and
Figure 7 is a rear view of the implement according to the invention, the said implement being in a position for use on a sloping surface.

The implement 1 according to the invention and as shown in the drawings is one for spreading material.

The implement 1 comprises a frame 2 provided with coupling elements 3 and 4 which can be coupled to the lifting arms and to a top rod, respectively, of a three-point lifting hitch of a tractor or a similar suchlike vehicle. The implement 1 is provided with two spreader members 5 and 6 arranged below a hopper 7. The spreader members 5 and 6 are located below the discharge nozzles 8 and 9, respectively, of the hopper 7. In this embodiment, each of the discharge nozzles 8 and 9 includes two discharge apertures 10 located above the spreader members. In a manner not shown in further detail, the spreader members 5 and 6 are arranged at shafts which are supported rotatably in bearing housings 11. Thus, the spreader members 5 and 6 are rotatable about the axes of rotation 12 and 13, respectively. The bearing housings 11 constitute part of a carrier housing 14, inside which there are accommodated transmission members for driving the spreader members. The carrier housing 14 includes a box 15 accommodating transmission members and a drive shaft 16.

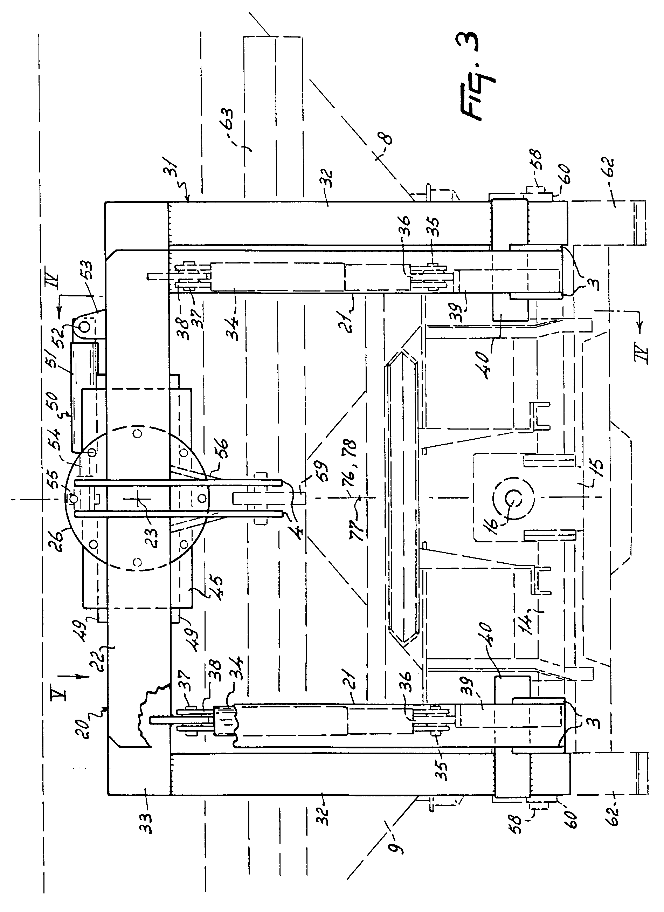

The frame 2 of the implement comprises a coupling trestle 20 which constitutes part of the frame 2 of the implement. Taken in the direction of operative travel 19, the coupling trestle 20 is provided at its front side with coupling elements 3 and 4. The coupling trestle 20 comprises two parallel upright frame beams 21, the top ends of which are interconnected by means of a cross-beam 22. Seen in the front view according to Figure 3, the beams 21 and 22 together constitute an inverted U. The coupling trestle 20 is capable of movement relative to the remainder of the frame 2 and, hence, relative to the remainder of the implement 1. The coupling trestle 20 is capable of movement relative to the remainder of the frame 2 about a pivot axis 23 which extends parallel to the direction of operative travel 19 and is located horizontally when the machine is in the horizontal position. The pivot axis 23 is located near the top end of the implement as well as of the coupling trestle 20 and intersects the cross-beam 22 in the middle of its length and height. The pivot axis 23 is constituted by a carrier disc 26 and a pivot disc 27 which is movable with respect thereto. In this embodiment, the carrier disc 26 is connected rigidly to the coupling trestle 20 and the pivot disc 27 is connected to the remainder of the frame 2. However, it is possible for the carrier disc 26 to be connected to the remainder of the frame 2 and for the pivot disc 27 to be connected to the coupling trestle 20. The pivot disc is movable in a groove 28 constituted by the carrier disc 26 and a carrier ring 29 fitted thereto. As is in particular apparent from Figure 4, the pivot disc 27 is supported capably of movement inside the groove 28 by means of its flange 30.

The pivot disc 27 is mounted to a carrier in the form of a carrier frame 31, which extends parallel to the coupling trestle 20 and, like same, transversely to the direction of operative travel 19. Taken in the direction of operative travel 19, the carrier frame 31 is located behind the coupling trestle 20. Like the coupling trestle 20, the carrier frame 31 consists of an inverted U comprising two parallel upright frame beams 32 and a cross-beam 33. Seen in the front view of Figure 3, the upright frame beams 32 are located beyond the upright frame beams 21, while the crossbeams 33 and 22 are located at the same level.

Besides by the pivotal connection constituted by the carrier disc 26 and the pivot disc 27, the coupling trestle 20 and the carrier frame 31 are also interconnected by means of members 34 which damp a movement of the coupling trestle 20 and the carrier frame 31 relative to each other about the pivot axis 23. Thus, the members 34 constitute movement dampers or shock dampers 34. The dampers 34 extend at some distance from the pivot axis 23 and are parallel to each other. The dampers 34 are parallel to the frame beams 21 and 32. The dampers 34 are located behind the frame beams 21 and beside the facing sides of the upright frame beams 32. By means of pivot shafts 35, the dampers 34 are attached capably of pivotal movement to lugs 36 arranged at the rear sides of the upright frame beams 21. The pivot shafts 35 of the two dampers are in alignment and extend, when the machine is in the horizontal position, horizontally and transversely to the direction of operative travel 19. By means of pivot shafts 37, the top ends of the dampers 34 are coupled capably of pivotal movement to lugs 38 arranged at the cross-beam 33. The pivot shafts 37, too, are in alignment and are parallel to the pivot shafts 35.

The coupling trestle 20 and the carrier frame 31 are furthermore interconnected by means of two hook-and-lock connections, each of which comprises a hook 39 and a lock 40. In this embodiment, the hooks 39 are arranged rigidly at the rear sides of the upright frame beams 21 and the locks 40 rigidly at the front sides of the upright frame beams 32 of the carrier frame 31. It will be obvious that it is also possible for the hooks 39 to be arranged at the carrier frame 31 and for the hooks 40 to be arranged at the coupling trestle 20. In a direction transverse to the direction of operative travel 19, the hooks 39 and the locks 40 are movable relative to each other. The locks 40 are constituted by horizontal, in this embodiment beam-shaped, portions 40 which from the upright frame beams 32 are directed towards each other and extend to beyond the facing sides of the frame beams 21 (Figure 3). By means of their lower ends, the lugs 36 are attached to the upper ends of the hooks 39, so that the attachments of the hooks 39 and of the lugs 36 to the frame beams 21 strengthen each other.

In addition to being capable of pivotal movement relative to each other about the pivot axis 23, the coupling trestle 20 and the carrier frame 31 are yet capable of a sliding movement relative to each other. This slidability is possible in a direction transverse to the direction of operative travel 19. This slidability is allowed by a slide structure comprising a slide carrier 45 which is attached rigidly to the pivot disc 27. The slide carrier 45 is constituted by a rectangular plate, which is attached rigidly against the rear side of the pivot disc 27 and at its top and bottom ends is provided with strips 46 arranged against the rear side of the slide carrier 45, which strips 46 constitute facing grooves 48. Inside these grooves 48 there are located slide strips 49 which are attached rigidly to the top and bottom sides of the cross-beam 33 (Figure 4). Like the grooves 48, the slide strips 49 are parallel to each other. Between the slide carrier 45 and the cross-beam 33 there is arranged an adjusting device 50 which constitutes part of the slide connection. This adjusting device 50 includes a hydraulic mechanism which, in this embodiment, has a cylinder 51 and a cylinder rod 54. By means of a pivot shaft 52, the cylinder 51 is coupled pivotably to a lug 53 which is attached rigidly to the top side of the cross-beam 33. By means of a pivot shaft 55, the cylinder rod 54, which is slidable inside the cylinder 51, is coupled pivotably to the strip 46 which is attached rigidly to the slide carrier 45.

In the centre of the carrier frame 31 and against the bottom side of the cross-beam 33 thereof there are arranged at slight interspace attachment lugs 56 which, at their lower ends, are provided with aligned apertures 57. The lower ends of the attachment lugs 56 are parallel, but the upper ends thereof diverge relative to each other in the upward direction (Figure 3). Near their ends, the upright frame beams 32 are provided with apertures 58. The lugs 56 having apertures 57 and the apertures 58 constitute attachment members, to which are coupled an attachment lug 59 and lugs 60, respectively. The lugs 59 and 60 are arranged at a carrier frame 61, to which are mounted the hopper 7 and the spreader members 5 and 6. Like the carrier frame 31, the carrier frame 61 constitutes part of the frame 2 of the implement. The carrier frame 61 comprises two parallel upright frame beams 62, the top ends of which are interconnected by means of a horizontal cross-beam 63. On either side of each beam 62 there are arranged lugs 60 at such an interspace that they fit on either side of the upright frame beam 32 of the carrier frame 31. The lug 59 is attached to the centre of the cross-beam 63 and extends in such a manner that it fits between the two attachment lugs 56, the arrangement being such that the lugs 59 and 60 constitute a three-point connection, by means of which the carrier frame 61 is coupled to the carrier frame 31. The three-point connection 59 and 60 is such that it can also be used for coupling the carrier frame 61 provided with hopper 7 and spreader members 5 and 6 as a separate spreader directly to the lifting hitch of a tractor or a similar suchlike vehicle. In this embodiment, the carrier frame 61 together with the hopper 7 and the two spreader members 5 and 6 constitutes part of the implement, the carrier frame 61 being coupled to the carrier frame 31 by means of the lugs 59 and 60. In this connection, the lugs 56 having apertures 57 and the apertures 58 constitute a three-point connection, to which the lugs 59 and 60 can be attached.

On the carrier frame 61 there is furthermore arranged an adjusting mechanism 64 (not shown in further detail), to which is connected a dosing member 65 (not shown in further detail) for closing the discharge apertures 10 to a greater or lesser extent.

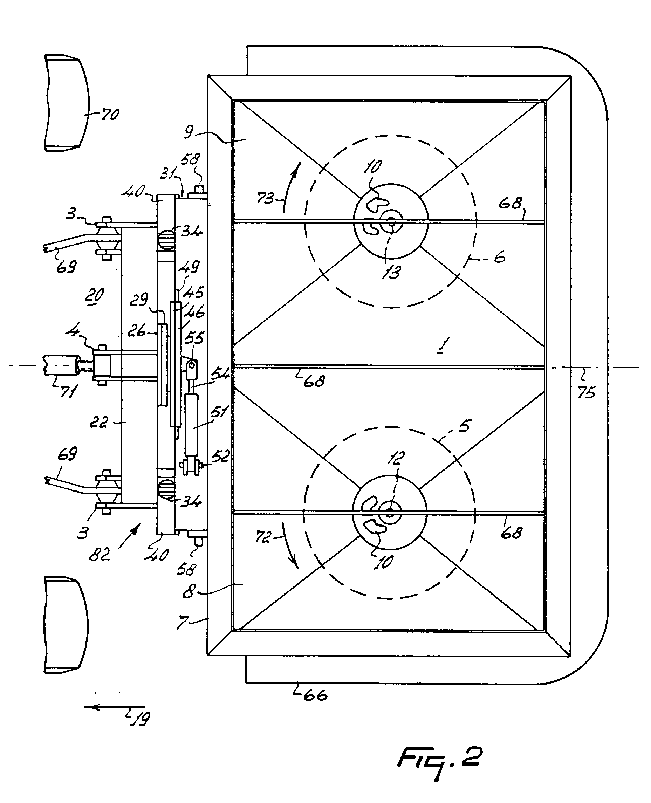

In addition, the carrier frame 61 carries a screen plate 66 which, seen in plan view, is rectangular in shape and extends substantially horizontally when the implement is in the horizontal position. As is apparent from the plan view according to Figure 2, the screen plate 66 extends towards the sides as well as towards the rear to slightly beyond the rectangular hopper 7.

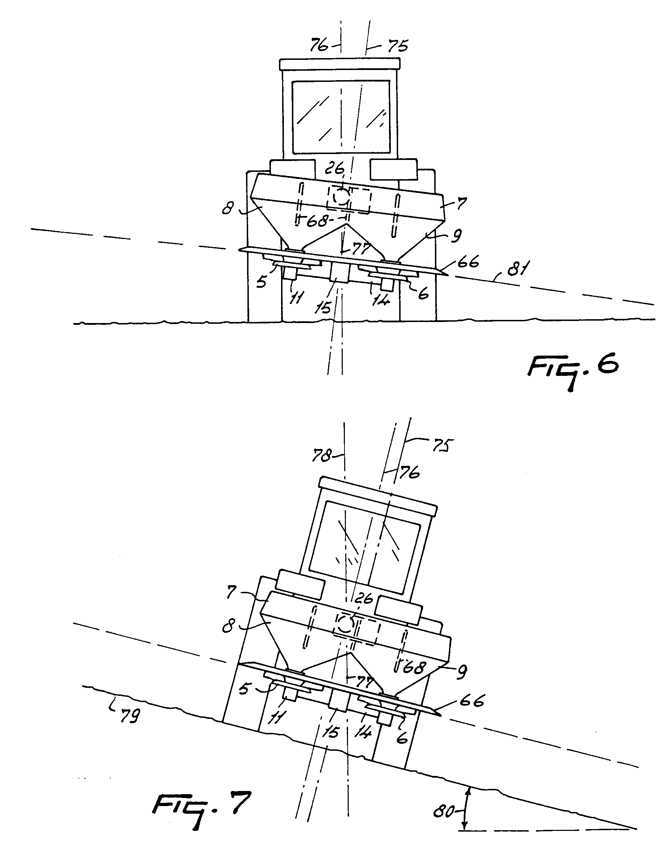

The hopper 7 is provided with partition walls 68, of which there are arranged three in this embodiment. The partition walls 68 are distributed evenly over the hopper breadth extending transversely to the direction of operative travel 19. The partition walls 68 are parallel to each other, one wall being located in the centre of the hopper and the other two above the centres of the discharge nozzles 8 and 9. At their top sides, the partition walls 68 are located near the top side of the hopper and parallel thereto. From their top sides, the partition walls extend towards the lower end of the hopper, but not necessarily as far as the bottom. In this embodiment, the central wall 68 extends to near the point where the two discharge nozzles 8 and 9 are connected in the centre of the hopper (Figures 6 and 7). The lower ends of the other two walls are located at some distance above the lower ends of the discharge nozzles 8 and 9. In this embodiment, as has been indicated in Figures 6 and 7, they do not extend further downwardly than the central wall 68.

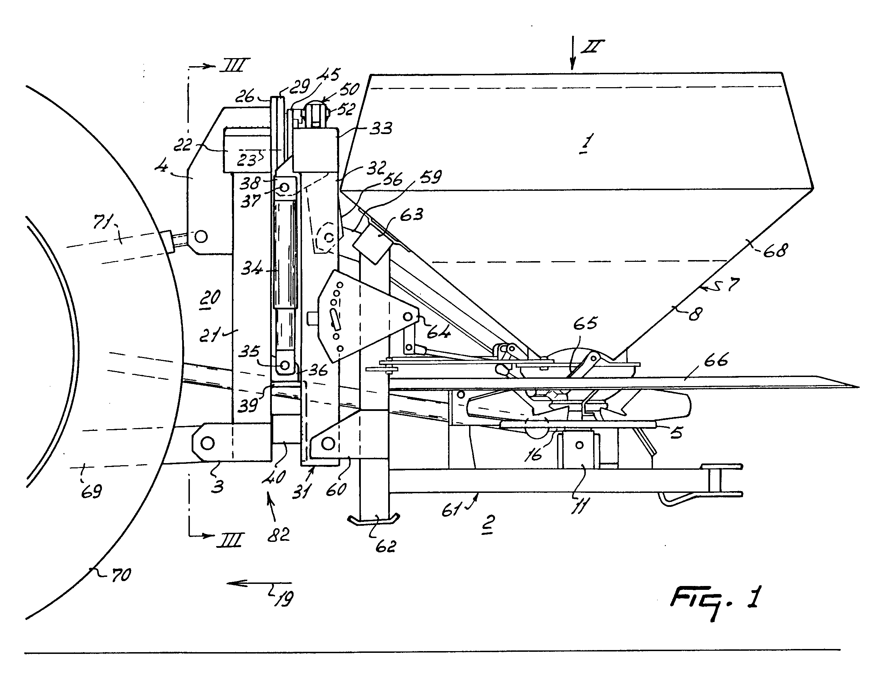

When the implement is to be employed, it is attached to the lifting hitch of a tractor or a similar suchlike vehicle, as has been shown in Figure 1. In the embodiment shown, the coupling elements 3 and 4 are coupled to the top rod 71 and the lifting arms 69 of the three-point lifting hitch of a tractor 70. During operation, the implement is moved across the surface area to be spread in the direction according to the arrow 19. The movable implement serves in particular for agricultural use in spreading material over the surface area of agricultural fields. For this purpose, the implement is provided with at least one spreader member. In this embodiment there are arranged two spreader members 5 and 6 which, during operation, are rotatable about the upwardly extending axes of rotation 12 and 13, respectively. During operation, the spreader members 5 and 6 are caused to rotate in the directions indicated by the arrows 72 and 73. The directions of rotation of the two rotating spreader members are contrary to each other, i.e. in such a manner that the facing sides of the two spreader members move in a direction parallel to the direction of operative travel 19. During operation, the material is supplied from the hopper 7 via the discharge apertures 10 to the spreader members 5 and 6. The amount of material to be supplied to the spreader member per unit of time can be controlled by adjustment of the doser slides 65 relative to the discharge apertures 10, the arrangement being such that these discharge apertures are closed to a greater or lesser extent. The adjustment of the doser slides 65 can be controlled by means of the adjusting device 64. In this embodiment, the contsruction of the spreader members 5 and 6 and the position of the apertures 10 are chosen such that the two spreader members spread the material over substantially identical distances on either side of the central plane 75 located centrally between the two spreader members and parallel to the parallel axes of rotation 12 and 13. Preferably, each of the spreader members spreads the material over substantially 180° about the axis of rotation of the relevant spreader member. As a result, the material can be spread over a wide strip during movement in the direction 19. In this connection, the central plane 75 is located parallel to the direction of operative travel 19, while the two spreader members, seen in the direction 19, are located side by side. The axes 12 and 13 are located in a plane perpendicular to the direction of operative travel 19. The position of the apertures 10 is such that the two spreader members spread the material substantially rearwardly. This is in a direction contrary to the direction of movement of the facing sides of the spreader members.

During operation, the two spreader members will extend substantially parallel to the surface to be spread. In order to obtain an optimally uniform distribution of the material over the surface area to be spread, it is of importance that, during operation, the spreader members remain parallel to this surface to be spread. Upon movement in the direction according to arrow 19, the two spreader members 5 and 6 will spread the material on either side of the central plane 75 and of the implement, so that a strip of the surface area to be spread is spread by the two spreader members. Normally, towards the edges of the strip to be spread the material is spread such that the quantity per unit of surface area decreases towards the edges. Over the distance where the quantity of material decreases towards the edges, the material is spread decreasingly in a similar manner in a next spreading run. Over the portions where the material decreases in quantity on both sides, the portions of the relevant strips are brought in overlap with each other in next spreading runs, the arrangement being such that there is obtained a uniform spread over the total surface area.

Particularly when spreading material over agricultural fields, the vehicle or tractor having the implement attached thereto can move continuously about its longitudinal axis due to the unevennesses of the soil. In order to prevent the transfer of these movements to the spreader members, at least the spreader members 5 and 6 are movable about the pivot axis 23 relative to the coupling trestle 20 as well as relative to the tractor to which it is attached. When the tractor moves about its longitudinal axis, i.e. performs a swinging movement thereabout, these swinging movements will not be transferred to the implement portion which by means of the pivot connection 23, 26, 27 is connected to the tractor 70 via the coupling trestle 20. Thus, during travel over uneven fields, the tractor will not transfer its swinging movements to the implement portion which includes the spreader members 5 and 6. As a result, the spreader members can maintain a stable position relative to the surface area to be spread. Consequently, a desired uniform distribution of the material over the surface area to be spread will not be affected by the swinging movements of the moving tractor. In order to ensure a stable position of the implement portion including the spreader members, it is preferred that the pivot axis 23 is located as highly as possible in the implement. Therefore, in this embodiment the pivot axis 23 is located near the top side of the coupling trestle 20 as well as of the hopper 7, so that the implement portion including the spreader members will tend to remain in its vertical position like a swinging pendulum.

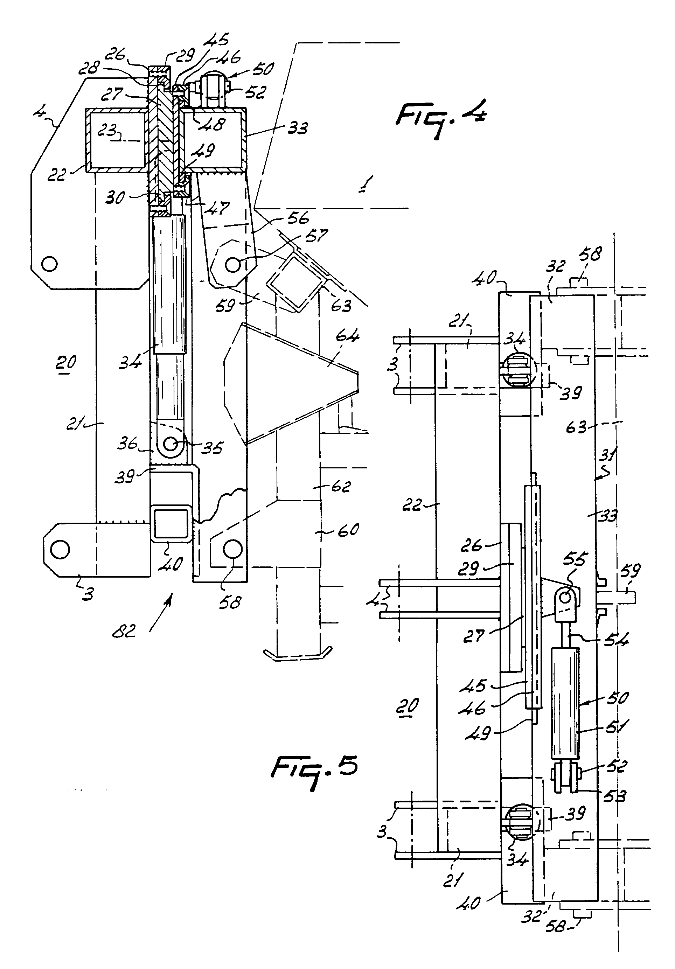

Due to the high position of the pivot axis 23, the centre of gravity of the implement will be lower than the pivot axis 23 and will tend to remain therebelow. The position of the pivot axis 23 will be chosen such that the centre of gravity of the implement, the hopper being empty or partly or completely filled with material, is located therebelow. The heavier the implement portion which includes the spreader members and is movable about the pivot axis 23 relative to the tractor, the greater will be the tendency of this portion to have its centre of gravity remain below the said pivot axis 23. Thus, the stable position of the spreader members 5 and 6 relative to the surface area to be spread will be influenced positively. For this reason, therefore, it is preferred to have not only the spreader members be pivotable about the pivot axis. Preferably, therefore, like in the embodiment according to Figures 1 to 7, the greater part of the implement including the spreader members is movable relative to the tractor about the pivot axis 23. In this connection, the hopper and the spreader members also maintain a fixed position relative to each other. Again, this is favourable in order to be able to supply the material from the hopper to substantially always the same place on the spreader members. As a result, a uniform spread will be influenced favourably.

A stable position of at least the spreader members relative to the surface area can furthermore be influenced favourably, when it is ensured that the implement portion including the spreader members will not get into an undesired swing about the pivot axis 23. The chance of the occurrence thereof is slight, in view of the low position of the centre of gravity of the implement relative to the pivot axis 23, while this chance is furthermore decreased according as a greater, hence heavier, portion of the implement determines this centre of gravity. This undesired swing can furthermore be counteracted in a favourable manner by the arrangement of damping members between the implement portion including the spreader members and the portion which is coupled to the tractor or similar suchlike vehicle. For this reason, the implement includes dampers 34. These dampers constitute shock dampers to counteract an undesired swing of the implement portion including the spreader members about the pivot axis 23. In this connection, it is of advantage when the two shock dampers 34 are located at some distance from the pivot axis 23. Therefore, the shock dampers 34 are fitted near the sides of the coupling trestle 20 as well as of the carrier frame 31, the arrangement being such as has been described above and as is apparent from the drawings. If so desired, these shock dampers may be adjustable as regards their damping effect. The dampers 34, the pivot axis 23 and the hooks 39 all together constitue coupling means which favourably influence a stable position of the spreader members relative to the surface area to be spread.

In order to have the forces occurring in the direction of operative travel 19 between the coupling trestle 20 and the implement portion including the spreader members 5 and 6 not only be absorbed by the pivot connection consisting of carrier disc 26 and pivot disc 27, there have been arranged the hook-and-lock connections 39, 40. From the coupling trestle 20, the hooks 39 engage the locks 40.

When the implement is moved over a horizontal surface, the central plane 75 will include the pivot axis 23. Then, the central plane 75, which is located centrally between the two spreader members and parallel to the axes of rotation thereof, assumes a vertical position. For specific purposes, such as when there is to be spread material at the edges of a surface area, e.g. along the sides of roads crossing the area or along the sides of ditches bordering thereon, it may be necessary to arrange the two spreader members at an angle relative to the surface area to be spread. Such a situation is shown in Figure 6. Then, towards the side which is downwardly inclined relative to the surface area to be spread, the material is distributed over a shortened distance. Thus, the material will be distributed evenly from the implement towards the edge to be spread over this shortened distance. This oblique position of the spreader members relative to the surface area to be spread can be obtained by laterally shifting or displacing the implement portion including the spreader members into a direction transversely to the direction of operative travel 19 relative to the coupling trestle 20. This displacement can be effected by means of the slide construction including the slide carrier 45 and the slide strips 49. As a result, the implement portion including the two spreader members 5 and 6 is shifted transversely to the pivot axis 23. This shift can be obtained by means of the adjusting device 50. As is apparent from Figure 6, the implement portion including the spreader members 5 and 6 slides laterally relative to the longitudinal plane 76 which includes the centre of the coupling trestle 20, the centre of the tractor as well as the pivot axis 23. The implement portion including the spreader members 5 and 6 remains pivotable about the pivot axis 23. As a result of the lateral movement of the implement portion including the spreader members, the centre of gravity of this implement portion is also shifted sidewardly. Due to the free pivotability of this implement portion about the pivot axis 23 relative to the coupling trestle 20, the centre of gravity of the implement will again tend to find a position which is located below the pivot axis 23. When, e.g. as indicated in Figure 6, the centre of gravity is located at point 77, the implement portion including the spreader members will assume an oblique position until its centre of gravity is located in the longitudinal plane 76, all this starting from the situation that the longitudinal plane 76 is located vertically. This will be the case when the tractor and the coupling trestle are in the horizontal position. Then, the centre of gravity 77 is located again below the pivot axis 23. When this position is attained, the spreader members will again have assumed a stable position relative to the surface area. Then, this new stable position is located obliquely relative to the surface area to be spread. Then, the material can be spread obliquely downwardly in one direction according to the spreading lines 81 for e.g. spreading same along the edges of the surface area to be spread. The angle at which the spreader members incline sidewardly and downwardly can be chosen by more or less shifting the implement portion including the spreader members relative to the pivot axis.

In an oblique position of the implement portion including the spreader members, in this embodiment the hopper 7, too, will assume an oblique position, because the spreader members 5 and 6 and the hopper 7 have a fixed position relative to each other due to their attachment to the carrier frame 61. In this oblique position of the hopper, in particular upon movement of the implement over uneven fields, the material contained in the hopper might tend to flow towards the downwardly directed side thereof. As a result, the centre of gravity of the implement might be shifted, which might lead to a change in the oblique position of the spreader members. In order to prevent this, inside the hopper there are arranged partition walls 68. In an oblique position of the hopper relative to the horizontal, these walls 68 prevent a lateral displacement of the material contained therein towards its lower side. Thus, the centre of gravity of the hopper and, hence that of the implement portion including the spreader members, will remain substantially in the same position. As a result, a chosen oblique position of the spreader members will be maintained.

The possibility of an oblique adjustment of the implement portion including the spreader members by a shift thereof relative to the coupling trestle 20 can also be employed in adjusting the implement for spreading material over sloping fields and parallel thereto. This is indicated in Figure 7. Also here, the implement portion including the spreader members is shifted relative to the coupling trestle 20. Due to this lateral displacement relative to the coupling trestle and relative to the pivot axis 23, the implement portion including the spreader members will assume an oblique position in such a way that the centre of gravity thereof is located again below the pivot axis 23, respectively in the perpendicular plane including the pivot axis 23. In dependence on the slope of the field to be spread, the implement portion can be shifted to a greater or lesser extent relative to the pivot axis 23 in order to adjust the spreader members to a position parallel to the surface to be spread. In this position, which is indicated in Figure 7, the two spreader members 5 and 6 are located parallel to the surface area to be spread, so that thereby the material is spread again over the same distance on either side of the central plane 75. In this situation, the central plane 75 and the longitudinal plane 76, which latter plane includes the centre of the tractor and of the coupling trestle 20 as well as the pivot axis 23, are again perpendicular to the surface area to be spread. Then, as has been indicated in the embodiment shown in Figure 7, the planes 75 and 76 are located beside each other and perpendicular to the surface 79 to be spread, which surface 79 is located at an angle 80 relative to the horizontal. When, from the situation indicated in Figure 7, it is wanted to adjust the spreader members in an oblique position relative to the surface 79, then the implement portion including the spreader members can be shifted further relative to the pivot axis in such a manner that the two spreader members arrive again in the desired oblique position relative to the surface area to be spread, all this according as has been indicated with reference to Figure 6 for the oblique position of the spreader members relative to the surface area. It will be obvious that the slide structure may also be designed such that the implement portion including the spreader members can be shifted towards the other side of the pivot axis than that shown in Figures 6 and 7. This in order to obtain an oblique position of the spreader members relative to the surface area to be spread towards the left-hand side, i.e. when, seen in the direction of operative travel 19, a surface area to be spread is inclined towards the left-hand side instead of towards the right-hand side as shown in Figure 7.

The maintenance of the spreader members in a stable position relative to the surface area to be spread is of particular importance when, during operation, they are to spread the material over a large distance, as is the case with rotary spreader members. For this spread distance may be influenced considerably due to a movement of the spreader member relative to the surface area to be spread.

Although in the embodiment there is shown an implement having two spreader members, the implement according to the invention may also be designed as having one spreader member. Also, it is possible to arrange in the implement two spreader members, each of which spreads the material substantially towards the one side of the central plane 75 of the implement, respectively towards the other side.

In the construction, as shown in the drawings and particularly in Figure 1, the whole of coupling elements to maintain a stable position of the spreader members 5 and 6 relative to the surface are to be spread is arranged between and at the coupling trestle 20 and the carrier frame 31. Together with the coupling elements including the pivot axis 23, the slide structure 45, 49 and the dampers 34, the coupling trestle 20 and the carrier frame 31 constitute a separate intermediate frame 82. This intermediate frame 82 is fitted to the coupling points 59 and 60 of the implement portion which, as it were, constitutes a separate spreader and includes the carrier frame 61 with the hopper 7 and the spreader members 5 and 6. Without using the intermediate frame 82, the implement portion can be attached to the top rod 31 and the lifting arms 69 of e.g. a tractor 70. In this case, of course, there will not be ensured a stable position of the spreader members, as has been described above, by means of the pivot axis 23.

The intermediate frame 82 consisting of the coupling trestle 20 and the carrier frame 31 with their interconnection via the pivot structure and the slide structure can be detached as a whole from the implement and be employed as a separate intermediate frame for coupling an other agricultural machine to a tractor or similar suchlike vehicle. By means of the intermediate frame 82, it is possible to couple an other implement for spreading material, such as e.g. a seed drill having laterally extending spreader arms or a pneumatic spreader implement having laterally extending spreader arms. During operative travel of the implement, the spreader arms can then be kept parallel to the surface area to be spread. Therefore, these spreader arms can be maintained in a fixed position relative to the relevant hopper constituting part of the implement.

Although in the embodiment the intermediate frame 82 is shown as a separately detachable unit, it may also be a non-easily detachable part of the implement. For example, the carrier frame 31 may constitute a rigid whole with the carrier frame 61.

Upon movement of the implement portion carrying the spreader members 5 and 6 relative to the trestle 20, the dampers 34 may assume a slightly oblique position relative to the coupling trestle 20, respectively the central plane 75 or the longitudinal plane 76. In order to be able to assume this oblique position, the respective pivots 35 and 37 have been adapted thereto, which is not shown in further detail. Due to the fact that the dampers at their lower ends remain attached in place in the coupling trestle 20 and at their upper ends remain in place in the carrier frame 31, the dampers 34, in this oblique position, will be loaded yet in an equal manner owing to the weight of the implement portion including the spreader members. Thus, also in an oblique position of the implement portion including the spreader members relative to the trestle 20, the dampers remain capable of performing their function properly. Also when the implement is in an oblique position relative to the horizontal, e.g. in operating a sloping surface, the two dampers 34 will remain loaded substantially equally, so that they remain capable of performing their function.

The screen plate 66 is arranged above the spreader members in such a manner that the material thrown thereby is moved substantially just below the circumferential edge of this screen plate. Material particles, which due to some cause or other, e.g. turbulence, are moved slightly too high, will be caught by the circumferential edge of the screen plate, so that they cannot move upwardly in an undesired manner but are guided downwardly along the circumference of the slightly obliquely downwardly directed edge of the screen plate. This screen plate may be of particular importance when, in an oblique position of the spreader members relative to the surface area to be spread, the material has to be spread near the edges of the surface area to be spread. The material flowing away in slightly uncontrolled, too high directions can then be guided downwardly, so that the material to be spread remains within the edges of the sides of the surface area to be spread.

## Claims

1. An implement for spreading over a surface area material, in particular granular and/or pulverulent material, such as fertilizer, which implement (1) comprises a frame (2), a hopper for the material to be spread and at least one spreader member (5, 6), to which material from the hopper can be delivered, the frame including a carrier frame (31) and a coupling trestle (20), the coupling trestle having coupling elements (3, 4) to couple the implement to a vehicle (70), e.g. a tractor, the carrier frame (31) supporting the at least one spreader member (5, 6), said carrier frame (31) and the coupling trestle (20) being pivotably coupled to one another by a pivot-structure to be pivotable relative to each other about a pivot axis (23) extending substantially parallel to the direction of normal operative travel of the implement, such that, during movement of the implement over the surface area, the at least one spreader member (5, 6) can maintain an at least substantially stable position relative to said surface area, characterized in that the carrier frame (31) and the coupling trestle (20) are coupled to each other by a shift structure (45, 46, 48, 49) to be displaceable relative to each other in a direction transverse to the direction of normal operative travel of the implement.

2. An implement as claimed in claim 1, characterized in that the shift structure (45, 46, 48, 49) is arranged near the pivot axis (23) between the coupling trestle (20) and the carrier frame (31) of the implement (1).

3. An implement as claimed in claim 1 or 2, characterized in that the shift structure (45, 46, 48, 49) includes an adjusting device (50) to adjust the carrier frame (31) and the coupling trestle (30) in a transverse direction relative to each other, one end of the adjusting device (50) being coupled to the carrier frame (31) and the other end to the coupling trestle (20).

4. An implement as claimed in claim 3, characterized in that the adjusting device (50) includes a hydraulic mechanism which has a cylinder (51) and a cylinder rod (54).

5. An implement as claimed in any one of the preceding claims , characterized in that the shift structure includes a carrier (45) rigidly attached to a pivot disc (27), said pivot disc (27) being movably coupled within a carrier ring (29) mounted to the trestle, said carrier (45) being slidably coupled with strips (49) attached to the carrier frame (31).

6. An implement as claimed in any one of the preceding claims, characterized in that the coupling trestle (20) and the carrier frame (31) extend parallel to each other and transversely to the direction of normal operative travel (19) of the implement.

7. An implement as claimed in any one of the preceding claims, characterized in that the coupling between the trestle (20) and the carrier frame (31) includes dampers (34), fitted between the trestle and the carrier frame, said dampers damping a movement of the trestle (20) and the carrier frame (31) around the pivot axis (23).

8. An implement as claimed in any one of the preceding claims, characterized in that the coupling trestle (20) and the carrier frame (31) are interconnected by means of two hook-and-lock connections (39, 40).

9. An implement as claimed in any one of the preceding claims, characterized in that the shift structure (45, 46, 48, 49) is located near the top end of the implement.

10. An implement as claimed in any one of the preceding claims, characterized in that the carrier frame (31) is attached to a further carrier frame (61) supporting the spreader member (5, 6).

11. An implement as claimed in claim 10, characterized in that the spreader member (5, 6) is arranged in the further carrier frame (61) capably of movement about an axis of rotation (12, 13).

12. An implement as claimed in claim 10 or 11, characterized in that the carrier frame (31) and the further carrier frame (61) are detachably coupled to one another by a three-point connection having means (56, 58) provided to the carrier frame (31) and means (59, 60) provided on the further carrier frame (61).

13. An implement as claimed in any one of the preceding claims, characterized in that it includes two spreader members (5, 6) which are rotatable about axes of rotation in opposite directions, which spreader members (5, 6) are designed such and, during operation, get the material supplied in such a manner that each of the spreader members spreads the material over the same working width on either side of the implement.

14. An intermediate frame usable to connect an implement (1) for spreading material over a surface area to a tractor or a similar suchlike vehicle (70), which intermediate frame (20, 31) includes a trestle (20) having coupling elements (3, 4) couplable to the vehicle (70) and a carrier frame (31) having coupling means (56, 58) couplable with the implement (1), which trestle (20) and carrier frame (31) are coupled to each other by a pivot structure to be pivotable relative to each other about an axis extending substantially parallel to the direction of normal operative travel of the implement, characterized in that said trestle (20) and said carrier frame (31) are coupled to each other by a shift structure (45, 46, 48, 49) to be shiftable relative to each other in a direction transverse to the direction of normal operative travel of the implement.

## Patentansprüche

1. Gerät zum Bestreuen einer Fläche mit Gut, insbesondere mit körnigem und/oder pulverigem Gut, wie z.B. Kunstdünger, wobei das Gerät (1) einen Rahmen (2), einen Vorratsbehälter für das auszustreuende Gut und mindestens ein Streuglied (5, 6) aufweist, dem Gut aus dem Vorratsbehälter zuzuführen ist, mit einem zu dem Rahmen gehörigen Tragrahmen (31) und einem Anbaubock (20), der Anschlusselemente (3, 4) zum Anschluss des Gerätes an ein Fahrzeug (70), beispielsweise einen Schlepper, aufweist, wobei der Tragrahmen (31) das Streuglied (5, 6) trägt und mit dem Anbaubock (20) mittels einer Schwenkvorrichtung verbunden sind, so dass der Tragrahmen (31) und der Anbaubock (20) relativ zueinander um eine Schwenkachse (23) schwenkbar sind, die sich im wesentlichen parallel zur Arbeitsrichtung des Gerätes derart erstreckt, dass das Streuglied (5, 6) beim Bewegen des Gerätes über das Feld eine zumindest im wesentlichen gleichbleibende Lage zu der Fläche beibehalten kann, dadurch gekennzeichnet, dass der Tragrahmen (31) und der Anbaubock (20) durch eine Schiebeführung (45, 46, 48, 49) miteinander verbunden sind, so dass sie relativ zueinander in quer zur Arbeitsrichtung des Gerätes verlaufender Richtung zu verschieben sind.

2. Gerät nach Anspruch 1, dadurch gekennzeichnet, dass die Schiebeführung (45, 46, 48, 49) nahe der Schwenkachse (23) zwischen dem Anbaubock (20) und dem Tragrahmen (31) des Gerätes (1) angeordnet ist.

3. Gerät nach Anspruch 1 oder 2, dadurch gekennzeichnet, dass die Schiebeführung (45, 46, 48, 49) eine Stellvorrichtung (50) zum Einstellen des Tragrahmens (31) und des Anbaubockes (20) in Querrichtung zueinander aufweist, wobei das eine Ende der Stellvorrichtung (50) mit dem Tragrahmen (31) und das andere Ende mit dem Anbaubock (20) verbunden ist.

4. Gerät nach Anspruch 3, dadurch gekennzeichnet, dass die Stellvorrichtung (50) einen Hydraulikmechanismus aufweist, der einen Zylinder (51) und eine Kolbenstange (54) hat.

5. Gerät nach einem der vorhergehenden Ansprüche, dadurch gekennzeichnet, dass die Schiebeführung einen Träger (45) aufweist, der an einer Drehscheibe (27) starr befestigt ist, die in einem an dem Anbaubock angebrachten Tragring (29) bewegbar ist, und dass der Träger (45) auf Gleitleisten (49) zu verschieben ist, die an dem Tragrahmen (31) angeordnet sind.

6. Gerät nach einem der vorhergehenden Ansprüche, dadurch gekennzeichnet, dass sich der Anbaubock (20) und der Tragrahmen (31) parallel zueinander und quer zur Arbeitsrichtung (19) des Gerätes erstrecken.

7. Gerät nach einem der vorhergehenden Ansprüche, dadurch gekennzeichnet, dass die Verbindung zwischen dem Anbaubock (20) und dem Tragrahmen (31) Dämpfungsglieder (34) aufweist, die zwischen dem Anbaubock und dem Tragrahmen angeordnet sind und eine Bewegung des Anbaubockes (20) und des Tragrahmens (31) um die Schwenkachse (23) dämpfen.

8. Gerät nach einem der vorhergehenden Ansprüche, dadurch gekennzeichnet, dass der Anbaubock (20) und der Tragrahmen (31) mittels zweier Haken-Sperr-Verbindungen (39, 40) miteinander verbunden sind.

9. Gerät nach einem der vorhergehenden Ansprüche, dadurch gekennzeichnet, dass die Schiebeführung (45, 46, 48, 49) nahe dem oberen Ende des Gerätes angeordnet ist.

10. Gerät nach einem der vorhergehenden Ansprüche, dadurch gekennzeichnet, dass der Tragrahmen (31) an einem weiteren Tragrahmen (61) angeordnet ist, der das Streuglied (5, 6) trägt.

11. Gerät nach Anspruch 10, dadurch gekennzeichnet, dass das Streuglied (5, 6) an dem weiteren Tragrahmen (61) um eine Drehachse (12, 13) bewegbar angeordnet ist.

12. Gerät nach Anspruch 10 oder 11, dadurch gekennzeichnet, dass der Tragrahmen (31) und der weitere Tragrahmen (61) mittels einer Dreipunkt-Verbindung lösbar miteinander verbunden sind, die an dem Tragrahmen (31) angeordnete Anschlüsse (56, 58) sowie an dem weiteren Tragrahmen (61) angeordnete Anschlüsse (59, 60) aufweist.

13. Gerät nach einem der vorhergehenden Ansprüche, dadurch gekennzeichnet, dass das Gerät zwei Streuglieder (5, 6) aufweist, die um Drehachsen gegensinnig drehbar und derart ausgebildet sind und im Betrieb das zugeführte Gut in der Weise aufnehmen, dass jedes der Streuglieder das Gut über dieselbe Streubreite beiderseits des Gerätes ausstreut.

14. Zwischenrahmen zum Anschluss eines zum Bestreuen einer Fläche mit Gut bestimmten Gerätes (1) an einen Schlepper oder ein ähnliches Fahrzeug (70), wobei der Zwischenrahmen (20, 31) einen Anbaubock (20) mit Anschlusselementen (3, 4) aufweist, die mit dem Fahrzeug (70) und einem Tragrahmen (31) zu verbinden sind, der mit dem Gerät (1) zu verbindende Anschlüsse (56, 58) aufweist, und wobei der Anbaubock (20) und der Tragrahmen (31) durch eine Schwenkvorrichtung miteinander verbunden sind, so dass sie relativ zueinander um eine im wesentlichen parallel zur Arbeitsrichtung des Gerätes gerichtete Achse schwenkbar sind, dadurch gekennzeichnet, dass der Anbaubock (20) und der Tragrahmen (31) mittels einer Schiebeführung (45, 46, 48, 49) miteinander verbunden sind, so dass sie relativ zueinander in einer quer zur Arbeitsrichtung des Gerätes verlaufenden Richtung zu verschieben sind.

## Revendications

1. Machine pour épandre sur une surface de la matière, en particulier de la matière granulaire et/ou pulvérulante, telle que de l'engrais, laquelle machine (1) comprend un châssis (2), une trémie pour la matière à épandre et au moins un organe épandeur (5, 6) auquel de la matière peut être fournie à partir de la trémie, le châssis comprenant un cadre porteur (31) et un chevalet d'attelage (20), le chevalet d'attelage ayant des éléments de couplage (3, 4) pour atteler la machine à un véhicule (70), par exemple à un tracteur, le cadre porteur (31) supportant l'organe épandeur (5, 6), ledit cadre porteur (31) et le chevalet d'attelage (20) étant articulés l'un à l'autre par une structure à pivot pour être pivotants, l'un par rapport à l'autre, autour d'un axe de pivot (23) s'étendant sensiblement parallèlement au sens de marche normal du travail de la machine, de telle sorte que, pendant le mouvement de la machine sur la surface d'épandage, l'organe épandeur (5, 6) peut conserver une position au moins pratiquement stable par rapport à la-dite surface, **caractérisée** en ce que le cadre porteur (31) et le chevalet d'attelage (20) sont reliés l'un à l'autre par une structure de coulissement (45, 46, 48, 49) pour pouvoir être déplacés, l'un par rapport à l'autre, dans un sens transversal au sens de marche normal du travail de la machine.

2. Machine selon la revendication 1, caractérisée en ce que la structure de coulissement (45, 46, 48, 49) est disposée près de l'axe de pivot (23) entre le chevalet d'attelage (20) et le cadre porteur (31) de la machine (1).

3. Machine selon la revendication 1 ou 2, caractérisée en ce que la structure de coulissement (45, 46, 48, 49) comprend un dispositif de réglage (50) pour ajuster le cadre porteur (31) et le chevalet d'attelage (20) dans un sens transversal, l'un par rapport à l'autre, une extrémité du dispositif de réglage (50) étant couplée au cadre porteur (31) et l'autre extrémité au chevalet d'attelage (20).

4. Machine selon la revendication 3, caractérisée en ce que le dispositif de réglage (50) comprend un mécanisme hydraulique qui a un cylindre (51) et une tige de cylindre (54).

5. Machine selon l'une quelconque des revendications précédentes, caractérisée en ce que la structure de coulissement comprend un élément porteur (45) attaché rigidement à un disque de pivotement (27) couplé de manière mobile à l'intérieur d'une couronne porteuse (29) montée sur le chevalet, ledit élément porteur (45) étant couplé à coulissement avec des barres (49) attachées au cadre porteur (31).

6. Machine selon l'une quelconque des revendications précédentes, caractérisée en ce que le chevalet d'attelage (20) et le cadre porteur (31) s'étendent parallèlement l'un à l'autre et transversalement au sens normal de marche (31) du travail de la machine.

7. Machine selon l'une quelconque des revendications précédentes, caractérisée en ce que le couplage entre le chevalet (20) et le cadre porteur (31) comprend des amortisseurs (34) montés entre le chevalet et le cadre porteur, lesdits amortisseurs amortissant un mouvement du chevalet (20) et du cadre porteur (31) autour de l'axe de pivotement (23).

8. Machine selon l'une quelconque des revendications précédentes, caractérisée en ce que le chevalet d'attelage (20) et le cadre porteur (31) sont interconnectés au moyen de deux liaisons à crochet et verrou (39, 40).

9. Machine selon l'une quelconque des revendications précédentes, caractérisée en ce que la structure de coulissement (45, 46, 48, 49) est située près de l'extrémité supérieure de la machine.

10. Machine selon l'une quelconque des revendications précédentes, caractérisée en ce que le cadre porteur (31) est attaché à un autre cadre porteur (61) supportant l'organe épandeur (5, 6).

11. Machine selon la revendication 10, caractérisée en ce que l'organe épandeur (5, 6) est disposé dans l'autre cadre porteur (61) en étant capable de mouvement autour d'un axe de rotation (12, 13).

12. Machine selon la revendication 10 ou 11, caractérisée en ce que le cadre porteur (31) et l'autre cadre porteur (61) sont couplés l'un à l'autre de manière amovible par une liaison à trois points ayant des moyens (56, 58) prévus sur le cadre porteur (31) et des moyens (59, 60) prévus sur l'autre cadre porteur (61).

13. Machine selon l'une quelconque des revendications précédentes, caractérisée en ce qu'elle comprend deux organes épandeurs (5, 6) qui sont rotatifs autour d'axes de rotation dans des sens opposés, lesquels organes épandeurs (5, 6) sont conçus de telle sorte que, pendant le travail, ils sont alimentés en matière de telle manière que chacun des organes épandeurs épande la matière sur la même largeur de travail sur chaque côté de la machine.

14. Châssis intermédiaire utilisable pour relier une machine (1) pour répandre de la matière sur une surface à un tracteur ou à un véhicule similaire (70), lequel châssis intermédiaire (20, 31) comprend un chevalet (20) ayant des éléments de couplage (3, 4) pouvant être couplés au véhicule (70) et un cadre porteur (31) ayant des moyens de couplage (56, 58) pouvant être couplés à la machine (1), lequel chevalet (20) et lequel cadre porteur (31) sont couplés l'un à l'autre par une structure à pivot pour être pivotants, l'un par rapport à l'autre, autour d'un axe s'étendant sensiblement parallèlement au sens normal de marche du travail de la machine,
**caractérisé** en ce que ledit chevalet (20) et ledit cadre porteur (31) sont couplés l'un à l'autre par une structure de coulissement (45, 46, 48, 49) en pouvant coulisser, l'un par rapport à l'autre, dans un sens transversal au sens normal de marche du travail de la machine.
